# EUROPÄISCHE PATENTSCHRIFT

(11) **EP 2 292 674 B1**
(45) Veröffentlichungstag und Bekanntmachung des Hinweises auf die Patenterteilung: **29.07.2020**
(21) Anmeldenummer: 10007930.0
(22) Anmeldetag: 29.07.2010
(51) Int. Cl.: C08G 18/08, B29K 75/00, B29C 44/34, E04B 1/76, E04B 1/94, C08G 101/00

(54) **Formschaumelement mit zumindest zwei unterscheidbaren Geometriestrukturen**
Foam element with at least two different geometrical structures
Elément de mousse doté d'au moins deux structures géométriques différentiables

(30) Priorität: 07.09.2009 DE 102009040203
(43) Veröffentlichungstag der Anmeldung: 09.03.2011
(73) Patentinhaber: puren GmbH, 88662 Überlingen (DE)
(72) Erfinder: Bommer, Hans, 88662 Überlingen (DE)
(74) Vertreter: Daub, Thomas

(56) Entgegenhaltungen:
- EP-A2- 1 571 167
- DE-A1-102004 041 143
- US-A1- 2004 157 945
- US-A1- 2006 148 919

## Beschreibung

### Stand der Technik

Es sind bereits Polyurethanschäume (PUR-Schaum) und Polyisocyanuratschäume (PIR-Schaum) bekannt, die eine Vlieskaschierung aufweisen, die prozesstechnisch während einer Herstellung des PUR-Schaums oder des PIR-Schaums eingefahren werden. Beispielsweise offenbart die EP 1 571 167 A2 ein Sandwichelement, bei welchem mittels Doppelbandverfahren ein Hartschaumstoff auf Isocyanatbasis zwischen zwei metallischen oder flexiblen Deckschichten aufgeschäumt wird. Diese PUR-/PIR-Hartschäume weisen gegenüber Polystyrol-, Mineralfaser, Holzfaser- oder Schaumglasdämmungen eine vorteilhaftere Wärmeleitzahl und damit eine höhere Dämmleistung auf. In Wärmedämmverbundsystemen, insbesondere zur Dämmung von Gebäuden, sind diese jedoch problematisch.

Bekannte PUR-/PIR-Hartschäume weisen produktimmanente Deckschichten auf, die an Haftzugfestigkeit verlieren, wenn sie durchfeuchten, beispielsweise bei einer Lagerung oder während einer Verarbeitung oder durch Diffusionsvorgänge über lange Zeit. Hinzu kommt eine Erhöhung einer kantendynamischen Steifigkeit, die zu Rissbildungen führen kann.

Weiter ist es produktionstechnisch nicht auszuschließen, dass unmittelbar unter der eingefahrenen Deckschicht Luft- oder Gasansammlungen stattfinden, die bei der späteren extremen Belastung von Wärmedämmverbundsystemen zu Blasenbildungen oder gar zu Ablösungen führen können.

Grundsätzlich ist es weiter bekannt, PUR-/PIR-Hartschäume ohne Deckschichten zu verwenden. Beispielsweise ist aus der US 2006/0148919 A1 ein Verfahren zur Herstellung von Prallschutzelementen aus Polyurethanschaum mit anisotroper Geometriestruktur bekannt. Diese sind jedoch nicht für die Verwendung und Beanspruchung im Wärmedämm-Verbundsystem (WDVS) konzipiert. Solche PUR-/PIR-Hartschäume weisen deshalb eine Geometriestruktur auf, die bei einer Langzeitbeanspruchung unter extremen Witterungsbedingungen Veränderungen zeigen.

### Erfindung

Der Erfindung liegt die Aufgabe zugrunde, ein kostengünstiges Formschaumelement bereitzustellen. Sie wird gemäß der Erfindung durch die Merkmale des Anspruchs 1 gelöst. Weitere Ausgestaltungen ergeben sich aus den Unteransprüchen.

Erfindungsgemäß wird ein Formschaumelement zumindest im Wesentlichen, d.h. aus mehr als 50%, und besonders bevorzugt vollständig aus Polyurethanschaum (PUR-Schaum) und/oder Polyisocyanuratschaum (PIR-Schaum), der in einem kontinuierlichen Verfahren hergestellt worden ist und eine homogene Rohdichte zwischen 28 und 40 kg/m³ aufweist, insbesondere für Wärmedämm-Verbundsysteme (WDVS) an Gebäuden, mit einer Zellstruktur, die in zumindest zwei senkrecht zueinander orientierten Raumrichtungen unterscheidbare Geometriestrukturen aufweist, und welches folienfrei ausgebildet ist vorgeschlagen.

Dadurch kann ein bezüglich seiner Eigenschaften anisotropes Formschaumelement realisiert werden, wodurch mittels eines Formschaumelements einfach eine Vielzahl von Anwendungsarten erschlossen werden kann. Dadurch kann eine Herstellung von Formschaumelementen, wie für Wärmedämm-Verbundsysteme oder Brandschutzriegel, vereinfacht werden, wodurch Kosten gesenkt werden können.

Unter einer "Zellstruktur" soll dabei insbesondere eine geometrische Struktur des Polyurethanschaums (PUR-Schaum) und/oder des Polyisocyanuratschaums verstanden werden. Insbesondere soll darunter eine geometrische Struktur von einzelnen Gaszellen innerhalb des PUR-/PIR-Schaums verstanden werden. Die Zellstruktur ist mittels mikroskopischer Mittel bestimmbar. Die Zellstruktur, die durch die Gaszellen innerhalb des Polyurethans definiert ist, ist mit einer ellipsoiden Struktur vergleichbar, d.h. die Gaszellen, die als Gaseinschlüsse in dem PUR-/PIR-Schaum angeordnet sind, weisen im Mittel eine ellipsoide Form auf. Die Gaszellen bilden somit entlang den Raumrichtungen jeweils eine Geometriestruktur aus, deren mittlere geometrische Eigenschaften unterscheidbar sind. Unter einer "Geometriestruktur" soll dabei insbesondere eine mittlere geometrische Abmessung der Gaszellen entlang der entsprechenden Raumrichtung verstanden werden. Unter einer "mittleren geometrischen Abmessung" soll dabei insbesondere ein Mittelwert einer Verteilung verstanden werden, wobei die Verteilung vorteilhaft als eine Größenverteilung von Abmessungen der Gaszellen entlang der entsprechenden Raumrichtung ausgebildet ist. Unter "unterscheidbaren Geometriestrukturen" soll damit insbesondere verstanden werden, dass die Mittelwerte der Abmessungen der Gaszellen für die unterschiedlichen Raumrichtungen um zumindest 5%, vorteilhafterweise um zumindest 10% und besonders bevorzugt um zumindest 20% voneinander abweichen. Unter einer "Raumrichtung" soll dabei eine von drei senkrecht aufeinander stehenden Raumrichtungen verstanden werden. Unter einem PUR-/PIR-Schaum soll im Folgenden zur Vereinfachung ein Polyurethanschaum und/oder Polyisocyanuratschaum verstanden werden. Unter "vorgesehen" soll insbesondere speziell ausgestattet und/oder ausgelegt verstanden werden.

Weiter wird vorgeschlagen, dass die Zellstruktur den einzelnen Raumrichtungen zugeordnete unterscheidbare Druckspannungen aufweist. Dadurch kann eine besonders einfache Anpassung der Eigenschaften des Formelements erreicht werden. Unter "unterscheidbaren Druckspannungen" soll dabei insbesondere verstanden werden, dass Werte der Druckspannungen entlang der Raumrichtungen um zumindest 5%, vorteilhafterweise um zumindest 10% und besonders bevorzugt um zumindest 20% voneinander abweichen.

Ferner ist es insbesondere vorteilhaft, wenn die Zellstruktur den einzelnen Raumrichtungen zugeordnete unterscheidbare Druckfestigkeiten aufweist. Dadurch kann das Formschaumelement vorteilhaft für Anwendungen in Wärmedämm-Verbundsystemen vorgesehen werden. Unter einer "Druckfestigkeit" soll dabei insbesondere eine Druckfestigkeit gemäß DIN 53421 verstanden werden. Unter "unterscheidbaren Druckfestigkeiten" soll dabei insbesondere verstanden werden, dass Werte der Druckfestigkeiten entlang der Raumrichtungen um zumindest 5%, vorteilhafterweise um zumindest 10% und besonders bevorzugt um zumindest 20% voneinander abweichen. Vorzugsweise betragen die Druckfestigkeiten aller Raumrichtungen zumindest 0,10 N/mm².

Weiter wird vorgeschlagen, dass die Zellstruktur eine in einer dritten Raumrichtung orientierte Geometriestruktur aufweist, die unterscheidbar von den beiden anderen Geometriestrukturen ist. Dadurch kann eine besonders vielfältige Einsetzbarkeit des Formschaumelements erreicht werden. Durch eine solche Ausgestaltung unterscheidet sich die Zellstruktur von der eiförmigen Zellstruktur insbesondere dadurch, dass in Bezug auf die Raumrichtung, entlang der die Geometriestruktur mit der größten Abmessung orientiert ist, rotationsasymmetrisch ist.

Vorzugsweise ist eine der Geometriestrukturen entlang einer Aufschäumrichtung orientiert. Dadurch kann das Formschaumelement vorteilhaft einfach hergestellt werden. Vorzugsweise ist die Geometriestruktur mit der größten Abmessung entlang der Aufschäumrichtung orientiert. Unter einer "Aufschäumrichtung" soll dabei insbesondere eine Richtung verstanden, entlang der der PUR-/PIR-Schaum nach dem Aufbringen auf eine Bandanlage aufschäumt.

Erfindungsgemäß weist das Formschaumelement eine Rohdichte auf, die zwischen 28 und 40 kg/m³ beträgt. Dadurch kann ein leichtes und vielseitig einsetzbares Formschaumelement realisiert werden. Unter einer "Rohdichte", angegeben in kg/m³, soll in diesem Zusammenhang insbesondere eine Dichte eines Materials verstanden werden, zu deren Ermittlung ein Porenvolumen in einem Materialvolumen mit einbezogen wird.

Erfindungsgemäß ist die Rohdichte des Formschaumelements homogen. Unter einer "homogenen" Rohdichte soll in diesem Zusammenhang insbesondere verstanden werden, dass in einer Verteilung von Messwerten der Rohdichte, die an Probevolumina in Form von Würfeln mit einer Kantenlänge von zehn Millimetern bestimmt wird, die aus einem Teil des Formschaumelements von einer parallel zu einer äußeren Oberfläche liegenden Mittelebene durch einen Volumenmittelpunkt bis zu der äußeren Oberfläche gewonnen werden, mindestens 70% der ermittelten Messwerte der Rohdichte in einem Intervall von ±20%, insbesondere in einem Intervall von ±10%, um einen statistischen Mittelwert liegen. Der "Volumenmittelpunkt" soll in diesem Zusammenhang insbesondere als identisch mit einem Schwerpunkt des Brandschutzriegelelements bei einer als konstant angenommenen Rohdichte verstanden werden.

Weiter ist es vorteilhaft, wenn das Formschaumelement eine Wärmeleitzahl aufweist, deren Rechenwert höchstens 0,028 W/(m•K) beträgt. Dadurch kann eine besonders effiziente Wärmedämmung erreicht werden. Unter einem "Rechenwert" soll dabei insbesondere ein um eine Alterungsnormkenngröße korrigierter Wert verstanden werden. Insbesondere soll damit unter einem "Rechenwert" ein Wert verstanden werden, der gemäß DIN EN 13165 um eine Alterungsnormkenngröße korrigiert wurde, die von einer Dicke der Wärmedämmplatte abhängt.

Vorzugsweise beträgt der Rechenwert der Wärmeleitzahl für dünne Formschaumelemente höchstens 0,028 W/(m•K), wobei unter dünnen Formschaumelementen Platten verstanden werden sollen, deren Dicke kleiner als 80 mm ist. Weiter beträgt der Rechenwert der Wärmeleitzahl für mittlere Formschaumelemente vorzugsweise höchstens 0,027 W/(m•K), wobei unter "mittleren Formschaumelementen" Platten verstanden werden sollen, deren Dicke zumindest 80 mm beträgt und kleiner als 120 mm ist. Ferner beträgt der Rechenwert der Wärmeleitzahl für dicke Formschaumelemente vorteilhafterweise höchstens 0,027 W/ (m•K), wobei unter dicken Formschaumelementen Platten verstanden werden sollen, deren Dicke zumindest 120 mm beträgt. In einer besonders vorteilhaften Ausgestaltung der Wärmedämmplatten kann von den Rechenwerten der Wärmeleitzahlen nochmals 0,001 abgezogen werden, wodurch sich für dünne Formschaumelemente ein Rechenwert von 0,027 W/(m•K), für mittlere Formschaumelemente ein Rechenwert von 0,026 W/(m•K) und für dicke Formschaumelemente ein Rechenwert von 0,025 W/(m•K) ergibt.

In einer Weiterbildung wird vorgeschlagen, dass das Formschaumelement zumindest einen Oberflächenteilbereich aufweist, auf den eine Beschichtung aufgebracht ist. Dadurch kann eine Oberfläche des Formschaumelements vorteilhaft an unterschiedliche Anforderungen angepasst werden. Insbesondere ist es vorteilhaft, wenn eine Oberfläche des Formschaumelements vollständig beschichtet ist. Unter einer "Beschichtung" soll in diesem Zusammenhang ein Aufbringen eines formlosen Materials, insbesondere im Unterschied zu einem Anbringen einer Schicht aus einem formbehafteten Material, auf die äußere Oberfläche verstanden werden, und zwar insbesondere durch ein Sprüh- oder Streichverfahren, wobei dem Fachmann, abhängig von dem verwendeten Material, gängige Methoden bekannt sind. Insbesondere ist das Formschaumelement dadurch folienfrei ausgebildet, wobei unter einer "Folie" insbesondere ein dünnschichtiges, d.h. insbesondere ein weniger als fünf Millimeter dickes, insbesondere ein auch ohne Trägermaterial zusammenhängendes Element verstanden werden soll.

Besonders vorteilhaft ist die Beschichtung zum Zweck einer farblichen Gestaltung und/oder zur Befestigung zwischenträgerfrei auf das Formschaumelement aufgebracht, wodurch ein besonders einfacher Aufbau eines Brandschutzes ermöglicht wird. Vorteilhaft können Putzaufbauten direkt auf das Formschaumelement aufgetragen werden, wodurch sich auf besonders einfache Weise Außenfassaden von Gebäuden mit Formschaumelementen erstellen lassen.

Vorzugsweise ist die Beschichtung zum Schutz vor UV-Strahlung vorgesehen. Dadurch kann eine Degradation von Eigenschaften des Brandschutzriegelelements und insbesondere seines oberflächennahen Materials während einer Aufbauphase, in der das Formschaumelement einer UV-Strahlung ausgesetzt sein kann, verhindert werden.

Zudem ist es vorteilhaft, wenn die Beschichtung zur Reduzierung einer Staubbildung vorgesehen ist. Dadurch kann insbesondere eine Belastung bei einer Verarbeitung gesenkt werden. Unter einer "Reduzierung einer Staubbildung" soll dabei insbesondere verstanden werden, dass ein von dem Formschaumelement abgegebener Staub reduziert wird. Besonders bevorzugt ist das Formschaumelement staubfrei, d.h. es gibt keinen Staub ab.

Weiter wird ein Verfahren zur Herstellung eines Wärmedämmelements aus einem erfindungsgemäßen Formschaumelement vorgeschlagen, bei dem das Formschaumelement derart zugeschnitten wird, dass eine Normale der Flächenerstreckung des Wärmedämmelements entlang einer Produktionsrichtung gerichtet ist. Dadurch kann für das Wärmedämmelement, das für sich genommen ebenfalls ein erfindungsgemäßes Formschaumelement bildet, einfach eine Druckfestigkeit bereitgestellt werden, durch die eine ausreichende Dimensionsstabilität zur Vermeidung von Verzügen erreicht werden kann. Unter einer Produktionsrichtung soll dabei insbesondere eine Richtung verstanden werden, entlang der das Formschaumelement zum Aufschäumen auf eine Bandanlage aufgebracht wird.

Außerdem wird ein Verfahren zur Herstellung eines Brandschutzriegelelements aus einem erfindungsgemäßen Formschaumelement vorgeschlagen, wobei das Formschaumelement derart zugeschnitten wird, dass eine Normale der Flächenerstreckung des Brandschutzriegelelements entlang einer Aufschäumrichtung gerichtet ist. Dadurch kann für das Brandschutzriegelelement, das für sich genommen ebenfalls ein erfindungsgemäßes Formschaumelement bildet, ebenfalls einfach eine Druckfestigkeit bereitgestellt werden, durch die eine ausreichende Dimensionsstabilität zur Vermeidung von Verzügen erreicht werden kann. Unter einer "Aufschäumrichtung" soll dabei insbesondere eine Richtung verstanden werden, entlang der sich das Formschaumelement auf einer Bandanlage während des Aufschäumens ausdehnt. Insbesondere soll darunter eine Richtung verstanden werden, die senkrecht zu einer Flächenerstreckung der Bandanlage orientiert ist.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Formschaumelement und ein Zuschnittverfahren zur Herstellung von Wärmedämmelementen,
- Fig. 2: schematisch eine Zellstruktur des Formschaumelements und
- Fig. 3: ein Formschaumelement und ein Zuschnittverfahren zur Herstellung von Brandriegelelementen.

### Beschreibung der Ausführungsbeispiele

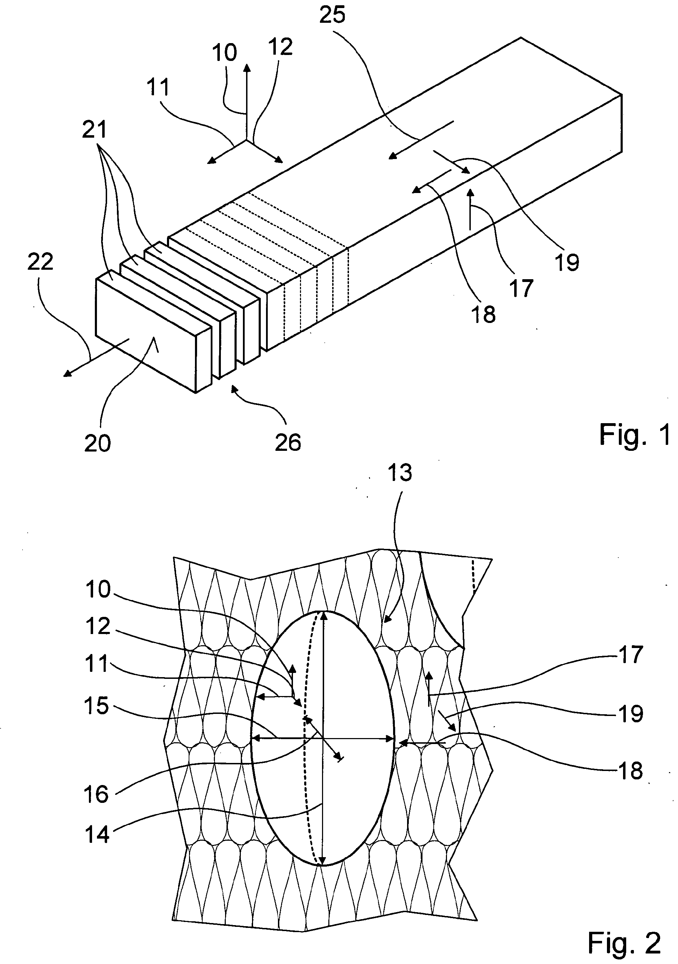

Die Figuren 1 bis 3 zeigen schematisch ein Formschaumelement aus einem Polyurethanschaum (PUR-Schaum) bzw. einen Polyisocyanuratschaum (PIR-Schaum), der gemäß einem dem Fachmann bekannten Aufschäumverfahren hergestellt wurde. Der PUR-/PIR-Schaum ist in einem kontinuierlichen Verfahren hergestellt.

In dem kontinuierlichen Aufschäumverfahren werden in einem kontinuierlichen Prozess chemische Grundstoffe, beispielsweise Polyol und Isocyanat für den PIR-Schaum, mit weiteren Zusatzstoffen gemischt und anschließend auf eine Bandanlage aufgetragen. Auf dieser Bandanlage erfolgen eine physikalische bzw. chemische Aufschäumung des Gemisches sowie gleichzeitig eine Vernetzungsreaktion der Komponenten, an deren Ende das Formschaumelement aus dem formstabilen PUR-/PIR-Schaum vorliegt. Der PUR-/PIR-Schaum wird anschließend durch Zuschnitt konfektioniert.

Mittels der Zusatzstoffe, die teilweise als Katalysatoren für das Aufschäumverfahren wirken, einem Neigungswinkel der Bandanlage und einer Produktionsgeschwindigkeit ist ein Grad einer Anisotropie des PUR-/PIR-Schaums einstellbar. Die Katalyse steuert eine Reaktionsgeschwindigkeit, mit der die Komponenten des PUR-/PIR-Schaums miteinander reagieren. Die Katalyse ist durch die Zusatzstoffe definiert.

Durch die Anisotropie weist das Formschaumelement eine Zellstruktur 13 auf, die drei unterscheidbare Geometriestrukturen 14, 15, 16 ausbildet. Die Geometriestrukturen 14, 15, 16 sind entlang der drei senkrecht aufeinander stehenden Raumrichtungen 10, 11, 12 orientiert. Die unterschiedlichen Geometriestrukturen 14, 15, 16 bewirken für die drei Raumrichtungen 10, 11, 12 des Formschaumelements unterschiedliche Druckspannungen.

Die unterschiedlichen Druckspannungen wiederum führen dazu, dass das Formschaumelement in den unterschiedlichen Raumrichtungen 10, 11, 12 unterschiedlich belastbar ist. Die Belastbarkeit ist mittels geeigneter, dem Fachmann bekannter Messverfahren, bestimmbar. Zudem kann der Fachmann die unterschiedlichen Geometriestrukturen 14, 15, 16 in den drei Raumrichtungen 10, 11, 12 auch direkt mittels mikroskopischer Analyse bestimmen.

Eine aus den Druckspannungen resultierende Belastbarkeit gemäß DIN 53421 beträgt in den einzelnen Raumrichtungen 10, 11, 12 jeweils mindestens 10 N/mm². Entlang der ersten Raumrichtung 10 beträgt die Belastbarkeit ca. 0,14 - 0,20 N/mm². Entlang der zweiten Raumrichtung 11 beträgt die Belastbarkeit ca. 0,11 - 0,14 N/mm². Entlang der dritten Raumrichtung 12 beträgt die Belastbarkeit ca. 0,10 - 0,11 N/mm².

Die drei Raumrichtungen 10, 11, 12 sind mittels einer Produktionsrichtung 18, die durch eine Aufbringung des PUR-/PIR-Schaums auf die Bandanlage festgelegt ist, definierbar. Die Produktionsrichtung 18 entspricht einer Richtung, in der die Bandanlage verfahren wird. Das kontinuierlich aufgebrachte Formschaumelement weist eine Haupterstreckung 25 auf, die entlang der Produktionsrichtung 18 gerichtet ist.

Die Bandanlage bildet eine Produktionsfläche aus, auf die der PUR-/PIR-Schaum aufgebracht wird. Der auf die Bandanlage aufgebrachte PUR-/PIR-Schaum schäumt nach dem Aufbringen senkrecht zu der Produktionsfläche auf. Eine Richtung senkrecht zu der Produktionsfläche ist somit als eine Aufschäumrichtung 17 definiert. Eine Richtung parallel zu der Produktionsfläche und senkrecht zu der Produktionsrichtung 18 bzw. senkrecht zu der Aufschäumrichtung 17 ist als eine Querrichtung 19 definiert.

Die Aufschäumrichtung 17, die Produktionsrichtung 18 und die Querrichtung 19 entsprechen den drei senkrecht zueinander orientierten Raumrichtungen 10, 11, 12. Die erste Raumrichtung 10 ist parallel zu der Aufschäumrichtung 17 definiert. Die zweite Raumrichtung 11 ist parallel zu der Produktionsrichtung 18 definiert. Die dritte Raumrichtung 12 ist parallel zu der Querrichtung 19 definiert.

Die drei unterschiedlichen Geometriestrukturen 14, 15, 16 sind als Geometrieeigenschaften ausgebildet, die durch unterschiedliche Abmessungen der Zellstruktur 13 entlang der Raumrichtungen 10, 11, 12 definiert sind. Die Zellstruktur 13 umfasst Gaszellen, die innerhalb des Polyurethans bzw. Polyisocyanurats angeordnet sind. Die Abmessungen, die die Geometriestrukturen 14, 15, 16 ausbilden, beschreiben eine räumliche Größe der Gaszellen. Einzelne Gaszellen können dabei unterschiedliche Abmessungen aufweisen. Die Geometriestrukturen 14, 15, 16 sind jeweils durch einen Mittelwert einer Größenverteilung ausgebildet, den die Abmessung der Gaszellen entlang der zugeordneten Raumrichtung 10, 11, 12 aufweist. Die Größenverteilung wird dabei innerhalb eines Einheitsvolumens, wie beispielsweise innerhalb von einem Würfel mit 1 cm Kantenlänge, bestimmt.

Die Geometriestruktur 14, die entlang der ersten Raumrichtung 10 orientiert ist, entspricht der größten Abmessung innerhalb der Zellstruktur 13. Ihr ist daher die höchste Belastbarkeit zugeordnet. Die Geometriestruktur 16, die entlang der dritten Raumrichtung 12 orientiert ist, weist die geringste Abmessung innerhalb der Zellstruktur 13 auf. Ihr ist daher die geringste Belastbarkeit zugeordnet. Die Geometriestruktur 15, die entlang der zweiten Raumrichtung 11 orientiert ist, weist eine Abmessung auf, die größer ist als die der Geometriestruktur 16 und kleiner als die der Geometriestruktur 14. Die Geometriestrukturen 14, 15, 16 unterscheiden sich jeweils um zumindest 20%. Werte der Geometriestrukturen sind direkt mittels der oben angegebenen Belastbarkeiten bestimmbar.

Das aus dem PUR-/PIR-Schaum hergestellte Formschaumelement weist eine Rohdichte auf, die zwischen 28 und 40 kg/m³ beträgt. Zur Ausbildung von Brandschutzriegelelementen 23 mittels des Formschaumelements wird beispielsweise ein PIR-Schaum verwendet, der eine homogene Rohdichte aufweist. Die Rohdichte beträgt dabei 32 kg/m³. Jedes Brandschutzriegelelement 23 ist in einer Form ausgestaltet, die im Wesentlichen einem prismatischen Körper, nämlich insbesondere einem Quader, entspricht. Seine rechteckige Querschnittsform besitzt eine Höhenabmessung von 220 mm und eine Materialdicke von 160 mm.

Aus dem Formschaumelement zugeschnittene Formschaumelemente 26, die beispielsweise als Wärmedämmelemente 21 oder Brandschutzriegelelemente 23 ausgebildet sind, weisen eine Wärmeleitzahl auf, deren Rechenwert je nach einer genormten Dicke der zugeschnittenen Formschaumelemente 26 kleiner als 0,026 W/(m•K) bis 0,028 W/(m•K) ist. Bei einer Materialdicke des Wärmedämmelements 21 ab 120 mm, was einer großen Dicke zugeordnet ist, beträgt die Wärmeleitzahl beispielsweise 0,026 W/(m•K).

Die zugeschnittenen Formschaumelemente 26 weisen Oberflächenteilbereiche auf, auf die eine Beschichtung 20 aufgebracht ist. Die Beschichtung 20 ist zum Schutz einer UV-Strahlung ausgebildet. Sie weist zumindest eine Komponente auf, die eine UV-Strahlung, wie insbesondere eine UV-A-Strahlung und eine UV-B-Strahlung, zumindest weitgehend absorbiert. Mittels der UV-Beschichtung sind die zugeschnittenen Formschaumelemente 26 insbesondere gegen eine natürliche UV-Strahlung der Sonne geschützt. Eine gesamte Oberfläche der Formschaumelemente 26 ist mit der Beschichtung überzogen.

Zudem ist die Beschichtung 20 zur Reduzierung einer Staubbildung vorgesehen. Die Beschichtung 20 umschließt den PUR-/PIR-Schaum der Formschaumelemente 26. Der PUR-/PIR-Schaum ist dadurch innerhalb der Beschichtung 20 gebunden, wodurch eine Staubbildung durch den PUR-/PIR-Schaum unterdrückt ist. Da die Beschichtung 20 die Formschaumelemente 26 vollständig umschließt, sind die zugeschnittenen und beschichteten Formschaumelemente 26 staubfrei.

Das kontinuierlich hergestellte, unverarbeitete Formschaumelement weist eine Haupterstreckungsrichtung 25 auf, die entlang der Produktionsrichtung 18 gerichtet ist. Zur Weiterverarbeitung wird das Formschaumelement zunächst auf einen rechteckförmigen Querschnitt zugeschnitten. Das vorverarbeitete Formschaumelement liegt danach als ein Quader vor, dessen Haupterstreckungsrichtung 25 entlang der Produktionsrichtung 18 gerichtet ist. Entlang der Aufschäumrichtung 17 weist das nun quaderförmige Formschaumelement eine Erstreckung auf, die kleiner ist als restliche Erstreckungen des vorverarbeiteten Formschaumelements. Entlang der Querrichtung 19 weist das vorverarbeitete Formschaumelement eine mittlere Erstreckung auf. Durch einen weiteren Zuschnitt kann das vorverarbeitete Formschaumelement für verschiedene Anwendungsarten konfektioniert werden.

Wird das vorverarbeitete Formschaumelement entlang einer Ebene geschnitten, die durch die erste Raumrichtung 10 und die dritte Raumrichtung 12 definiert ist, erhält man Formschaumelemente 26, die als die Wärmedämmelemente 21 für Wärmedämm-Verbundsysteme an Gebäuden verwendet werden können. Die entlang der durch die Raumrichtungen 10, 12 definierten Ebenen geschnittenen Formschaumelemente 26 weisen Flächenerstreckungen entlang der beiden Raumrichtungen 10, 12 auf. Eine Normale 22 der Flächenerstreckung ist somit entlang der Produktionsrichtung 18 orientiert. Eine Dicke der Formschaumelemente 26, die entlang der Normale 22 der Flächenerstreckung bestimmt wird, ist dadurch entlang der zweiten Raumrichtung 11 orientiert (vgl. Figur 1).

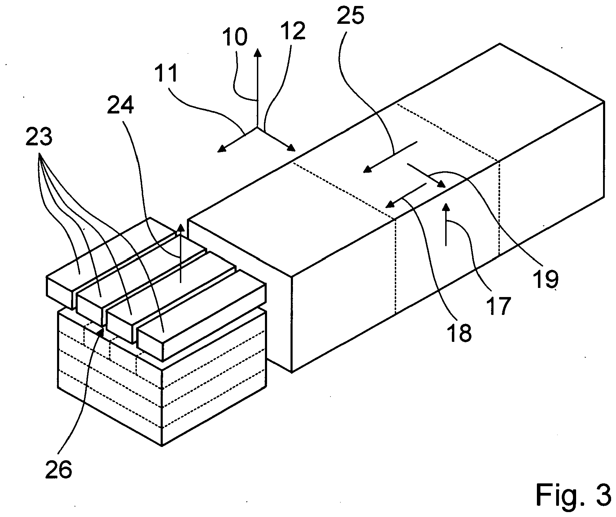

Wird das vorverarbeitete Formschaumelement zunächst entlang einer Ebene geschnitten, die durch die zweite Raumrichtung 11 und die dritte Raumrichtung 12 definiert ist, und anschließend entlang einer Ebene, die durch die erste Raumrichtung 10 und die zweite Raumrichtung 11 definiert ist, erhält man Formschaumelemente 26, die als Brandschutzriegelelemente 23 an Gebäuden verwendet werden können. Die so geschnittenen Formschaumelemente 26 weisen eine Flächenerstreckung entlang der durch die Raumrichtungen 11, 12 definierten Ebene auf. Eine Normale 24 der Flächenerstreckung ist somit entlang der Aufschäumrichtung 17 orientiert. Eine Dicke der Formschaumelemente 26, die entlang der Normale 24 der Flächenerstreckung bestimmt wird, ist dadurch entlang der ersten Raumrichtung 10 orientiert (vgl. Figur 3).

**Bezugszeichen**

| | | | |
|---|---|---|---|
| 10 | Raumrichtung | 22 | Normale |
| 11 | Raumrichtung | 23 | Brandschutzriegelelement |
| 12 | Raumrichtung | | |
| 13 | Zellstruktur | 24 | Normale |
| 14 | Geometriestruktur | 25 | Haupterstreckung |
| 15 | Geometriestruktur | 26 | Formschaumelement |
| 16 | Geometriestruktur | | |
| 17 | Aufschäumrichtung | | |
| 18 | Produktionsrichtung | | |
| 19 | Querrichtung | | |
| 20 | Beschichtung | | |
| 21 | Wärmedämmelement | | |

## Patentansprüche

1. Formschaumelement aus Polyurethanschaum (PUR-Schaum) und/oder Polyisocyanuratschaum (PIR-Schaum), der in einem kontinuierlichen Verfahren hergestellt worden ist und eine homogene Rohdichte zwischen 28 und 40 kg/m³ aufweist, insbesondere für Wärmedämm-Verbundsysteme (WDVS) an Gebäuden, mit einer Zellstruktur (13), die in zumindest zwei senkrecht zueinander orientierten Raumrichtungen (10, 11, 12) unterscheidbare Geometriestrukturen (14, 15, 16) aufweist, und welches folienfrei ausgebildet ist.

2. Formschaumelement nach Anspruch 1,
**dadurch gekennzeichnet, dass**
die Zellstruktur (13) den einzelnen Raumrichtungen (10, 11, 12) zugeordnete unterscheidbare Druckspannungen aufweist.

3. Formschaumelement nach Anspruch 1 oder 2,
**dadurch gekennzeichnet, dass**
die Zellstruktur (13) den einzelnen Raumrichtungen (10, 11, 12) zugeordnete unterscheidbare Druckfestigkeiten aufweist.

4. Formschaumelement nach einem der vorhergehenden Ansprüche,
**dadurch gekennzeichnet, dass**
die Zellstruktur (13) eine in einer dritten Raumrichtung (12) orientierte Geometriestruktur (16) aufweist, die unterscheidbar von den beiden anderen Geometriestrukturen (14, 15) ist.

5. Formschaumelement nach einem der vorhergehenden Ansprüche,
**dadurch gekennzeichnet, dass**
eine der Geometriestrukturen (14) entlang einer Aufschäumrichtung (17) orientiert ist.

6. Formschaumelement nach einem der vorhergehenden Ansprüche,
**gekennzeichnet durch**
eine Wärmeleitzahl, deren Rechenwert höchstens 0,028 W/(m•K) beträgt, wobei der Rechenwert ein Wert ist, der gemäß DIN EN 13165 um eine Alterungsnormkenngröße korrigiert wurde, die von einer Dicke der Wärmedämmplatte abhängt.

7. Formschaumelement nach einem der vorhergehenden Ansprüche,
**gekennzeichnet durch**
zumindest einen Oberflächenteilbereich, auf den eine Beschichtung (20) aufgebracht ist.

8. Formschaumelement nach Anspruch 7,
**dadurch gekennzeichnet, dass**
die Beschichtung (20) zum Schutz vor UV-Strahlung vorgesehen ist.

9. Formschaumelement nach Anspruch 7 oder 8,
**dadurch gekennzeichnet, dass**
die Beschichtung (20) zur Reduzierung einer Staubbildung vorgesehen ist.

10. Verfahren zur Herstellung wenigstens eines Wärmedämmelements (21) aus einem Formschaumelement nach einem der vorhergehenden Ansprüche,
**dadurch gekennzeichnet, dass**
das Formschaumelement derart zugeschnitten wird, dass eine Normale (22) einer Flächenerstreckung des Wärmedämmelements (21) entlang einer Produktionsrichtung (18) gerichtet ist.

11. Verfahren zur Herstellung eines Brandschutzriegelelements (23) aus einem Formschaumelement nach den Ansprüchen 1 bis 9,
**dadurch gekennzeichnet, dass**
das Formschaumelement derart zugeschnitten wird, dass eine Normale (24) einer Flächenerstreckung des Brandschutzriegelelements (23) entlang einer Aufschäumrichtung (17) gerichtet ist.

## Claims

1. Moulded-foam element made of polyurethane foam (PUR foam) and/or polyisocyanurate foam (PIR foam) produced in a continuous procedure and having a homogeneous bulk density between 28 kg/m³ and 40 kg/m³, in particular for composite heat insulation systems (EIFS/ETICS) on buildings, with a cell structure (13) which has geometrical structures (14, 15, 16) which are distinguishable in at least two spatial directions (10, 11, 12) oriented perpendicularly to each other, and which is embodied free of foils.

2. Moulded-foam element according to claim 1,
**characterised in that**
the cell structure (13) has distinguishable compression tensions which are allocated to the individual spatial directions (10, 11, 12).

3. Moulded-foam element according to claim 1 or 2,
**characterised in that**
the cell structure (13) has distinguishable compression strengths which are allocated to the individual spatial directions (10, 11, 12).

4. Moulded-foam element according to one of the preceding claims,
**characterised in that**
the cell structure (13) has a geometrical structure (16) that is oriented in a third spatial direction (12) and that is distinguishable from the other two geometrical structures (14, 15).

5. Moulded-foam element according to one of the preceding claims,
**characterised in that**
one of the geometrical structures (14) is oriented along a foaming direction (17).

6. Moulded-foam element according to one of the preceding claims,
**characterised by**
a thermal conductivity whose calculation value is maximally 0.028 W/(m∗K), the calculation value being a value corrected, in accordance with DIN EN 13165, by a standard aging parameter that depends on a thickness of the heat-insulation plate.

7. Moulded-foam element according to one of the preceding claims,
**characterised by**
at least one partial surface area which a coating (20) has been applied on.

8. Moulded-foam element according to claim 7,
**characterised in that**
the coating (20) is configured for a protection against UV radiation.

9. Moulded-foam element according to claim 7 or 8,
**characterised in that**
the coating (20) is configured for a reduction of dust generation.

10. Method for a production of at least one heat insulation element (21) from a moulded-foam element according to one of the preceding claims,
**characterised in that**
the moulded-foam element is cut to measure in such a way that a normal (22) of a surface extent of the heat insulation element (21) is oriented along a production direction (18).

11. Method for a production of a flame-retardant bar element (23) from a moulded-foam element according to claims 1 to 9,
**characterised in that**
the moulded-foam element is cut to measure in such a way that a normal (24) of a surface extent of the flame-retardant bar element (23) is oriented along a foaming direction (17).

## Revendications

1. Élément en mousse moulée composé de mousse de polyuréthane (mousse PUR) et/ou de mousse de polyisocyanurate (mousse PIR) produite dans un procédé continu et ayant une densité apparente homogène entre 28 kg/m³ et 40 kg/m³, en particulier pour des systèmes composites d'isolation thermique (ITE/ETICS) aux immeubles,
avec une structure cellulaire (13) qui comporte des structures géométriques différenciables (14, 15, 16) dans au moins deux directions spatiales (10, 11, 12) orientées perpendiculairement l'une par rapport à l'autre, et qui est réalisée sans film.

2. Élément en mousse moulée selon la revendication 1,
**caractérisé en ce que**
la structure cellulaire (13) présente des tensions compressives différenciables allouées aux directions spatiales individuelles (10, 11, 12).

3. Élément en mousse moulée selon la revendication 1 ou 2,
**caractérisé en ce que**
la structure cellulaire (13) présente des résistances à compression différenciables allouées aux directions spatiales individuelles (10, 11, 12).

4. Élément en mousse moulée selon l'une quelconque des revendications précédentes,
**caractérisé en ce que**
la structure cellulaire (13) présente une structure géométrique (16) qui est orientée dans une troisième direction spatiale (12) et est différenciable des deux autres structures géométriques (14, 15).

5. Élément en mousse moulée selon l'une quelconque des revendications précédentes,
**caractérisé en ce que**
l'une des structures géométriques (14) et orientée le long d'une direction de moussage (17).

6. Élément en mousse moulée selon l'une quelconque des revendications précédentes,
**caractérisé par**
une conductivité thermique la valeur de calcul de laquelle est maximalement 0,028 W/m∗K), la valeur de calcul étant une valeur corrigée selon DIN EN 13165 par un paramètre standard de vieillissement qui dépend d'une épaisseur de la plaque d'isolation thermique.

7. Élément en mousse moulée selon l'une quelconque des revendications précédentes,
**caractérisé par**
au moins une zone partielle de superficie, sur laquelle un revêtement (20) a été appliqué.

8. Élément en mousse moulée selon la revendication 7,
**caractérisé en ce que**
le revêtement (20) est prévu pour une protection contre rayonnement UV.

9. Élément en mousse moulée selon la revendication 7 ou 8,
**caractérisé en ce que**
le revêtement (20) est prévu pour une réduction d'une formation de poussière.

10. Procédé pour la production d'au moins un élément d'isolation thermique (21) d'un élément en mousse moulée selon l'une quelconque des revendications précédentes,
**caractérisé en ce que**
l'élément en mousse moulée est coupé à mesure de telle manière qu'une normale (22) d'une étendue planaire de l'élément d'isolation thermique (21) est orientée le long d'une direction de production (18).

11. Procédé pour la production d'un élément de verrou ignifuge (23) d'un élément en mousse moulée selon les revendications 1 à 9,
**caractérisé en ce que**
l'élément en mousse moulée est coupé à mesure de telle manière qu'une normale (24) d'une étendue planaire de l'élément de verrou ignifuge (23) est orientée le long d'une direction de moussage (17).
